# FASCICULE DE BREVET EUROPEEN

(11) **EP 0 614 034 B1**
(45) Date de publication et mention de la délivrance du brevet: **04.06.1997**
(21) Numéro de dépôt: 94102204.8
(22) Date de dépôt: 23.02.1994
(51) Int. Cl.: F16L 11/08, F16L 11/133, F16L 11/12, B63B 27/24, E21B 17/01, E21B 47/00, E21B 47/10, G01M 3/04

(54) **Tuyau souple comportant des moyens de détection visuelle précoce d'un dysfonctionnement et ses brides d'extrémites**
Schlauch mit Mitteln zur visuellen Früherkennung von einer Fehlfunktion und seine Endflanschen
Hose having means for the visual early detection of a malfunction and its end flanges

(30) Priorité: 03.03.1993 FR 9302557
(43) Date de publication de la demande: 07.09.1994
(73) Titulaire: CAOUTCHOUC MANUFACTURE ET PLASTIQUES DE PALPORT, 63000 Clermont-Ferrand (FR)
(72) Inventeur: Ragout, Bernard, F-63170 Aubiere (FR); Mayau, David, F-63430 Pont du Chateau (FR); Moreau, Charles, F-63112 Blanzat (FR)
(74) Mandataire: Peuscet, Jacques

(56) Documents cités:
- FR-A- 1 373 301
- FR-A- 2 099 210
- FR-A- 2 418 900
- FR-A- 2 524 116

## Description

L'invention se rapporte au domaine du convoyage des fluides et, plus particulièrement, au transport de fluides polluants voire dangereux, dans le domaine de l'exploitation pétrolière offshore, notamment.

L'invention concerne, spécialement, les tuyaux flexibles utilisés pour établir des liaisons à fort débit entre des points de chargement ou déchargement de produits pétroliers et des navires de transport qui sont soumis à des sollicitations mécaniques de fatigue du fait de la houle et des mouvements des navires amplifiées par le vieillissement dû au séjour permanent en milieu marin.

Le remède à de tels risques consiste à empêcher que le fluide transporté ne s'échappe du tuyau endommagé et à instaurer un système visuel de détection de la défaillance pour pourvoir, au plus vite, au remplacement dudit tuyau. Il a donc été proposé de poser, dans une partie de la longueur du tuyau, un renforcement secondaire, intervenant en secours en cas de déchéance de l'armature principale.

Une telle solution est décrite dans le document FR 2 524 116 de DUNLOP qui précise, qu'en cas d'avarie de l'armature principale, la pression du fluide qui la traverse provoque un gonflement radial localisé dû à l'allongement du matériau de l'armature secondaire, ce qui rend détectable, lors d'une inspection visuelle, le tuyau défaillant. Cependant, l'effet souhaité de déformation localisée de l'armature secondaire ne donne qu'incomplètement satisfaction.

En effet, lorsque l'armature secondaire s'allonge, la dilatation radiale qui en résulte est proportionnelle à la pression de fuite du fluide. Si la pression de fuite n'est qu'une fraction de la pression de service, la dilatation radiale qui en résulte n'est qu'une fraction de la dilatation maximale et, de ce fait, la détection de la défaillance est rendue plus difficile. La disposition proposée n'est donc efficace que si la pression de fuite est proche de la pression de service afin que la dilatation radiale soit proche de la valeur maximale.

Une autre raison qui limite l'intérêt de la solution proposée réside dans le fait que la dilatation radiale entraine une réduction de longueur du tuyau, ce qui implique l'utilisation de tuyaux d'une longueur supérieure à la distance entre les éléments à raccorder.

La présente invention est donc relative à un tuyau flexible comportant deux armatures de renforcement coaxiales, la plus externe, dite armature de sécurité, assurant le confinement du fluide ayant traversé l'armature principale défaillante et un ensemble de déformations localisées du tuyau flexible mettant en évidence le dysfonctionnement lors d'une inspection visuelle.

L'objectif de l'invention est de porter remède aux insuffisances des réalisations antérieures, en rendant les déformations localisées du tuyau flexible indépendantes - au dessus d'un certain seuil - de la pression du fluide ayant traversé l'armature principale, tout en maintenant constante la longueur du tuyau flexible, ce qui, grâce à des déformations localisées radiales et longitudinales optimales, assure la fiabilité et la précocité de la détection visuelle du dysfonctionnement.

L'invention est donc un tuyau flexible permettant la détection visuelle précoce d'un dysfonctionnement, dont la paroi comporte, dans le corps cylindrique, de sa partie la plus interne jusqu'à sa partie externe, une robe d'étanchéité, une armature principale, une couche intercalaire de séparation des armatures, un coussinet de portance, une strate de confinement, une armature de sécurité dont la structure autorise, dans des zones déterminées, une déformation localisée, au moins l'une desdites zones étant une zone de dilatation radiale, un coussin intercalaire de portance et un revêtement périphérique.

L'invention est caractérisée en ce que l'armature de sécurité est coaxiale à l'armature principale, sur la totalité de sa longueur, et en est maintenue écartée, dans le corps cylindrique, par un coussinet de portance de faible cohésion dont la résistance à la déchirure est au plus égale à 5 bars et l'adhérence aux constituants au contact au plus égale à 5 daN/cm de largeur, en ce que le tuyau flexible présente au moins une zone de compensation, dans laquelle le différentiel d'angle de pose de l'armature de sécurité par rapport à l'angle d'équilibre est compris entre -2 et +12 degrés, en ce qu'au moins une zone de compensation est formée d'une zone contractile (A) dans laquelle le différentiel d'angle de pose (α) de l'armature de sécurité est compris entre +3 et +12 degrés et d'une zone à invariance dimensionnelle (B) dans laquelle le différentiel d'angle de pose (β) de l'armature de sécurité est compris entre -2 et +2 degrés, de sorte que la déformation localisée se produit dès que la pression de fuite (Pf) du fluide ayant traversé l'armature principale défaillante atteint une valeur seuil (Vs), fraction de la pression normale de service (Ps).

L'invention ainsi que ses variantes seront mieux comprises à la lecture de la description accompagnant les dessins, dans lesquels :
- la figure 1 est une élévation latérale d'un tuyau flexible, à l'état de service normal ;
- la figure 2 est une élévation latérale du tuyau flexible, tel qu'il permet, selon l'invention, la détection visuelle précoce du dysfonctionnement par dilatation radiale de zones prévues à cet effet et compensation par les zones adjacentes ;
- la figure 3 est une demi-coupe longitudinale partielle du tuyau flexible selon l'invention, mettant en évidence une zone de raccordement de l'armature de sécurité entre une zone de dilatation radiale et une zone de compensation ;
- la figure 4 est une vue "en écorché" du tuyau flexible selon l'invention, schématisant les angles de pose de l'armature de sécurité dans une zone de dilatation radiale ou de compensation et dans une zone de raccordement ;
- la figure 5 représente, en demi-coupe longitudinale, un mode de réalisation de la zone transitoire de raccordement à une bride en deux parties ;
- la figure 6 shématise, également en demi-coupe longitudinale, un autre mode d'exécution de la zone transitoire de raccordement, comportant un frettage unique.
- la figure 7 représente un autre mode de réalisation de la zone transitoire de raccordement, comportant deux éléments de frettage.

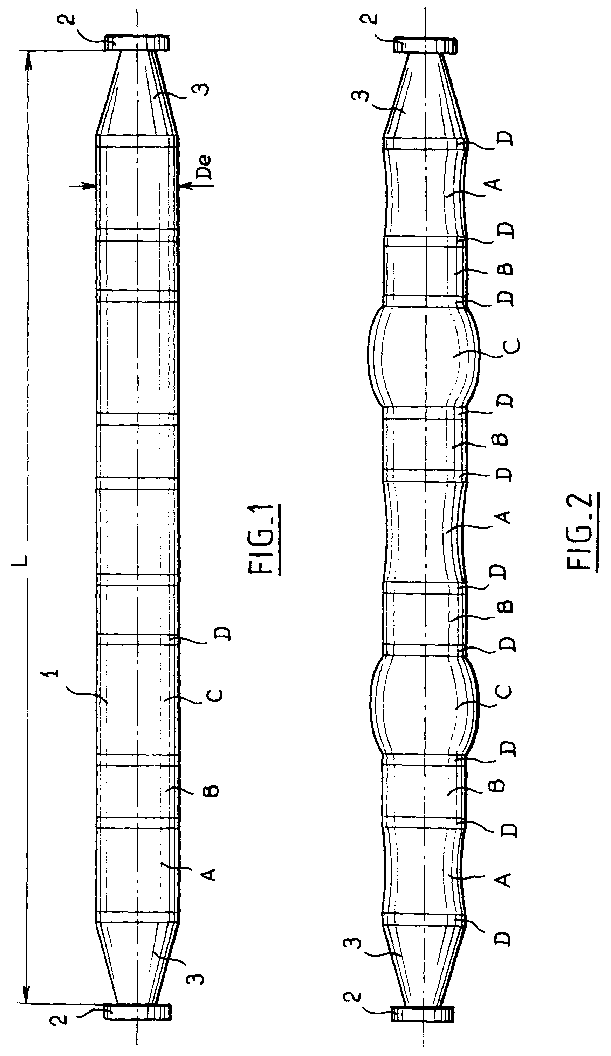

La figure 1 représente, par une élévation latérale, un tuyau flexible selon l'invention, à l'état de service normal, c'est à dire en absence de défaillance de l'armature principale. Le corps cylindrique (1) du tuyau flexible, constitué de zones (A, B, C, D), toutes de même diamètre lors d'un fonctionnement sans fuite, est relié, par des zones transitoires de raccordement (3), de forme générale tronconique, aux brides (2), servant au raccordement des tuyaux flexibles entre eux, d'une part, et aux points de chargement/déchargement ou aux navires d'autre part, pour constituer une ligne en exploitation.

Le corps cylindrique (1), comme les zones transitoires de raccordement (3) comportent, de manière non apparente, les constituants du tuyau flexible, au dessus desquels est placé un revêtement périphérique qui assure la protection, la personnalisation à la marque du fabricant et la signalisation dudit tuyau flexible.

La figure 2 est une élévation du tuyau flexible selon l'invention, tel qu'il se présente lors d'une défaillance de l'armature principale se laissant traverser par le fluide véhiculé et dont les déformations localisées permettent la détection visuelle du dysfonctionnement.

L'intérêt particulier de la structure du tuyau flexible selon l'invention réside dans la possibilité d'une détection de la fuite de fluide à basse pression de fuite (Pf), grâce à la faible cohésion d'un coussin de portance autorisant, de ce fait, une détection précoce du dysfonctionnement.

En effet, selon l'invention, l'accumulation, dans l'espace situé entre l'armature principale et l'armature de sécurité, du fluide véhiculé provoque, sous l'effet de la pression de fuite (Pf), un ensemble de déformations localisées qui est optimal dès que la pression de fuite (Pf) atteint une valeur seuil (Vs), qui n'est qu'une fraction de la pression de service (Ps) dudit tuyau flexible.

La détection visuelle optimale se produit pour une pression du fuite (Pf) d'un quart seulement de la pression de service (Ps), grâce à une disposition particulière des paires de nappes de cablés constituant l'armature de sécurité et à la faible cohésion du coussinet de portance.

La présente variante du tuyau flexible comporte, outre les zones transitoires de raccordement (3), deux zones de dilatation radiale (C), quatre zones à invariance dimensionnelle (B), et trois zones contractiles (A), chacune de ces zones (A, B, C) étant liée à la zone voisine par une zone de raccordement (D).

Sous l'effet de la pression de fuite (Pf), il se produit une dilatation radiale localisée dans les zones (C) et une contraction radiale dans les zones contractiles (A), alors que les zones à invariance dimensionnelle (B) assurent une meilleure répartition des contraintes entre ces déformations antagonistes, les zones de raccordement (D) étant destinées à assurer la progressivité de passage des dispositions particulières de l'armature de sécurité d'une zone à une autre.

La valeur du rapport de dilatation de la zone de dilatation radiale (C) se situe, à titre d'exemple, à 1,3 à partir de la valeur seuil (Vs) et est indépendant de la pression de fuite (Pf) entre la valeur seuil (Vs) et la pression de service (Ps).

Simultanément, la zone contractile (A) voit se réduire son diamètre extérieur. Le résultat en est un contraste accentué entre les zones de dilatation radiale (C) et les zones contractiles (A), accroissant l'effet visuel de déformation du tuyau flexible.

Selon l'invention, les différentes zones (A, B, C) ont des coefficients de variation dimensionnelle sous l'effet de la pression de fuite (Pf) différents, mis à profit pour obtenir une accentuation de l'effet visuel et une compensation de réduction dimensionnelle longitudinale des zones de dilatation radiale (C) par l'allongement des zones contractiles (A). Les zones à invariance dimensionnelle (B), viennent compenser les efforts axiaux résultant des variations longitudinales des zones (A ou C), sans modifications de leurs dimensions.

Une telle disposition des différentes zones du corps cylindrique (1) n'est qu'un exemple de réalisation, le nombre, la longueur, la répartition et le positionnement relatif des zones des différents types étant variables selon les nécessités de l'application ; la disposition minimale, selon l'invention, est constituée d'une zone de dilatation radiale (C) et d'une zone contractile (A) avec les zones de raccordement (D) correspondantes et les zones transitoires de raccordement (3), la longueur des zones à invariance dimensionnelle (B) étant alors nulle.

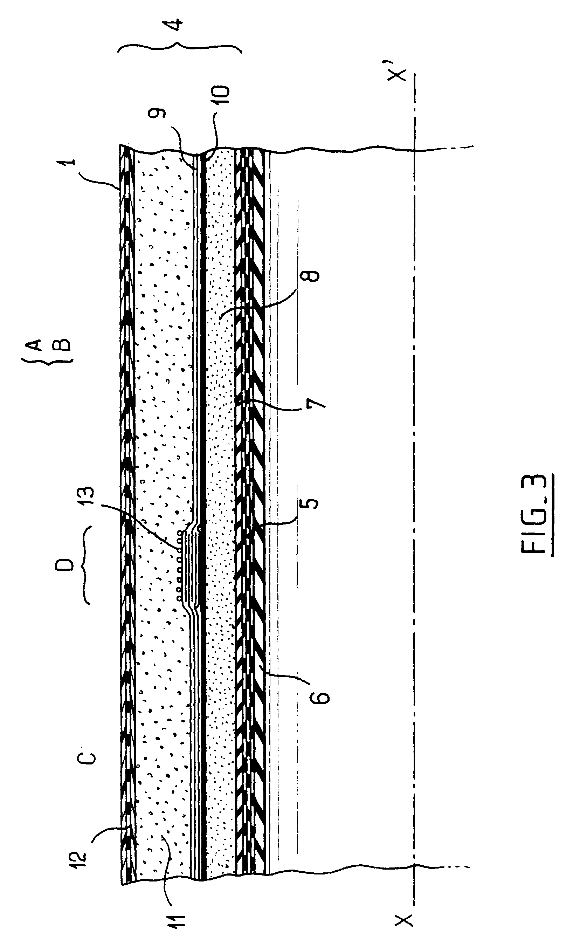

La figure 3 représente, en demi-coupe longitudinale partielle, par rapport à l'axe (XX'), la structure interne d'un tuyau flexible selon l'invention, dans la région du corps cylindrique (1) et permet la mise en évidence de l'agencement de l'armature de sécurité dans une zone de raccordement (D).

De sa couche la plus interne, à partir de l'axe longitudinal (XX') jusqu'à sa couche périphérique, la paroi (4) du tuyau flexible comporte, disposés coaxialement, une robe d'étanchéité (6) au contact du fluide véhiculé, une armature principale (5), une couche intercalaire de séparation des armatures (7), un coussinet de portance (8) puis une armature de sécurité (9) protégée par une strate de confinement (10), disposée sur sa face en regard du coussinet de portance (8), un coussin intercalaire de portance (11) en matériau compact ou cellulaire, et, destiné à protéger l'ensemble des constituants de la paroi des agressions du milieu extérieur, un revêtement périphérique (12).

La robe d'étanchéité (6) est réalisée dans une composition élastomérique compacte spécialement formulée pour présenter une inertie chimique au fluide véhiculé. Préférentiellement, l'élastomère de base de ladite composition élastomérique est un copolymère butadiène - acrylonitrile, seul ou en combinaison avec un autre élastomère.

L'armature principale (5) a pour but d'assurer la résistance mécanique du tuyau flexible aux conditions de service. Elle est constituée d'au moins une paire de nappes croisées de cablés, à haut module d'Young - préférentiellement des cablés métalliques ou des cablés de polyamide aromatique - disposés à un angle de pose voisin de l'angle d'équilibre, qui permet le maintien constant des caractéristiques dimensionnelles du tuyau flexible soumis à la pression de service (Ps).

La couche intercalaire de séparation des armatures (7) assure la liaison, d'une part avec l'armature principale (5), d'autre part avec le coussinet de portance (8). Elle est réalisée dans une composition élastomérique compacte, préférentiellement à base de polyisoprène naturel ou de synthèse et adhère, par liaison physico-chimique, aux deux composants en regard, armature principale (5) et coussinet de portance (8).

Ledit coussinet de portance (8), dont la caractéristique principale est de présenter une faible cohésion, est constitué d'un matériau compact pour une utilisation du tuyau flexible en condition immergée dite "sous-marine", ou d'un matériau de flottabilité, lorsque le tuyau flexible doit être auto-flottant.

Lorsque le coussinet de portance (8) est un matériau compact il est partiellement constitué soit d'un tissu - non traité ou revêtu d'un agent empêchant localement son adhérence aux constituants au contact -, ce qui permet de créer une zone partielle de moindre résistance à l'interface, soit d'un film mince présentant les mêmes propriétés, tel que, à titre d'exemples non limitatifs, un film de polyéthylène, de polypropylène ou de polyester.

Lorsque le coussinet de portance (8) est un matériau de flottabilité, il est, le plus généralement constitué d'un matériau cellulaire, de masse spécifique inférieure à 100 kg/m3, et préférentiellement comprise entre 30 et 70 kg/m3, et joue un rôle de complément du coussin intercalaire de portance (11) alors réalisé en matériau cellulaire pour assurer la flottabilité.

Une strate de confinement (10) est placée entre le coussinet de portance (8) et l'armature de sécurité (9) et assure leur liaison adhésive par voie physico-chimique. Elle permet, lors de la défaillance de l'armature principale (5), de confiner le fluide dans la zone plus interne, sans intervenir sur les variations dimensionnelles des zones de dilatation radiale (C) ou contractiles (A).

Disposée coaxialement au coussinet de portance (8) et à la strate de confinement (10), l'armature de sécurité (9) est continue axialement d'une bride (2) à l'autre du tuyau flexible et, de ce fait, entoure complètement l'armature principale (5) dont elle se trouve séparée, sauf dans les zones transitoires de raccordement (3), par le coussinet de portance (8).

Ladite armature de sécurité (9), élément essentiel de l'invention, est constituée d'au moins une paire de nappes croisées de cablés, disposés selon des enroulements hélicoïdaux de différentiels d'angles de pose par rapport à l'angle d'équilibre variables, pour créer des zones successives présentant des comportements spécifiques vis à vis des sollicitations mécaniques induites par la pression de fuite (Pf) lors d'une défaillance de l'armature principale (5).

Le différentiel d'angle de pose des paires de nappes de cablés constituant l'armature de sécurité (9) prend des valeurs s'écartant, selon les zones, de plus ou moins douze degrés par rapport à l'angle d'équilibre. De ce fait, lorsque le différentiel d'angle de pose prend des valeurs comprises entre - 12 et -3 degrés, il est créé, dans la paroi (4) du tuyau flexible, une zone de dilatation radiale (C), alors que lorsque le différentiel d'angle de pose prend des valeurs comprises entre +3 et +12 degrés, il est créé une zone contractile (A).

Lorsque le différentiel d'angle de pose prend des valeurs comprises entre -2 et +2 degrés, il est créé une zone à invariance dimensionnelle (B).

La nécessaire continuité de l'armature de sécurité (9) implique que soient raccordées, dans les zones de raccordement (D), les paires de nappes croisées qui la constituent, afin d'assurer la transmission mécanique des efforts d'une zone à l'autre. La longueur de la zone de raccordement (D) est celle de la longueur du raccordement lui-même.

Il est techniquement plus aisé de réaliser le raccordement de nappes croisées dont les différentiels d'angle de pose sont plus voisins, c'est à dire de raccorder les nappes croisées d'une zone à dilatation radiale (C) ou d'une zone contractile (A) avec celles d'une zone à invariance dimensionnelle (B).

Les zones de raccordement (D) sont donc des zones de jonction, par recouvrement de pli à pli, entre les nappes de l'armature de sécurité (9) de deux zones consécutives. Dans lesdites zones, est placé, au dessus du pli supérieur du raccordement, un renfort transversal (13), constitué de cablés, par exemple textiles, disposés orthogonalement à l'axe longitudinal (XX') du tuyau flexible et noyés dans le coussin intercalaire de portance (11), qui a pour but d'assurer la cohésion des différents plis.

L'armature de sécurité (9) est entourée d'un coussin intercalaire de portance (11) dont le matériau est compact ou cellulaire selon que le tuyau flexible est prévu pour une utilisation en version submersible ou autoflottante.

En effet, le diamètre extérieur (De) du tuyau flexible, l'épaisseur et la densité des éléments constitutifs de sa paroi (4) sont adaptés, en fonction de la masse spécifique du fluide véhiculé et de celle de l'eau de mer, pour autoriser une flottabilité fonctionnelle soit positive si le tuyau flexible doit être auto-flottant, soit négative si le tuyau doit être submersible.

Pour une flottabilité fonctionnelle positive, le coussin intercalaire de portance (11) est réalisé dans un matériau cellulaire de masse spécifique faible, par exemple de 30 à 70 kg/m3.

Pour une utilisation en version submersible, le coussin intercalaire de portance (11) est, le plus généralement, constitué d'une feuille de composition élastomérique compacte.

Le composant le plus externe de la paroi (4) est constitué par un revêtement périphérique (12), lié par adhérence physicochimique au coussin intercalaire de portance (11), et qui a pour fonction d'assurer la protection de l'ensemble des composants contre les agressions du milieu extérieur, chocs et abrasion, risques de pollution et vieillissement par le séjour en milieu marin. Il est constitué d'une composition élastomérique, préférentiellement à base d'un élastomère de polychloroprène, et comporte des renforcements textiles ou métalliques, sous forme de fils continus ou discontinus ou de nappes, dont le but est d'assurer la résistance mécanique.

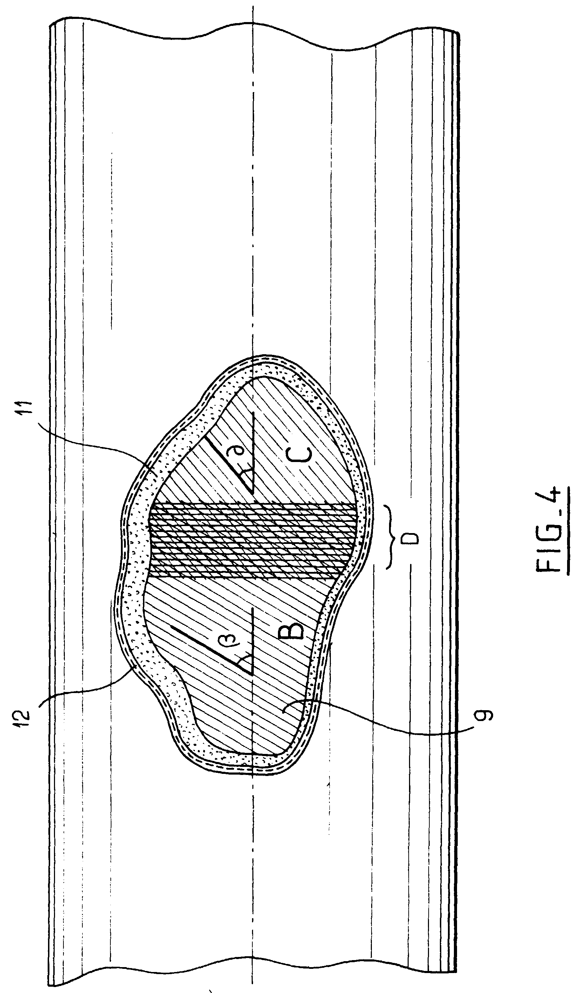

La figure 4 présente sur une vue "en écorché" de la paroi d'un tuyau flexible selon l'invention, les dispositions des nappes croisées de l'armature de sécurité (9), dans les zones de dilatation radiale (C), à invariance dimensionnelle (B) et de raccordement (D).

Au dessous du revêtement périphérique (12) et du coussin intercalaire de portance (11), sont mis en évidence les angles de pose (β) dans la zone à invariance dimensionnelle (B) et (δ) dans la zone de dilatation radiale (C) des nappes constituant l'armature de sécurité (9).

Dans la zone à invariance dimensionnelle (B), le différentiel de l'angle de pose (β) est compris entre -2 et +2 degrés, ce qui a pour conséquence de maintenir constantes les dimensions, tant radiales qu'axiales, du tuyau flexible dans ladite zone, lorsque s'exerce la pression de fuite (Pf).

Dans la zone de dilatation radiale (C), le différentiel de l'angle de pose (δ) est compris entre -12 et -3 degrés, ce qui a pour conséquence, au contraire, de provoquer une dilatation dans le sens radial, accompagnée d'une réduction de longueur dans le sens longitudinal. Par la transmission des efforts assurée par le coussin intercalaire de portance (11) jusqu'au revêtement périphérique (12), la dilatation radiale de ladite zone (C) se manifeste, a la surface du tuyau flexible, par un bombement permettant une détection visuelle aisée du dysfonctionnement.

D'une manière inverse, dans la zone contractile (A), où le différentiel d'angle de pose (α) est compris entre +3 et +12 degrés, il se produit une contraction radiale, accompagnée d'un allongement longitudinal qui a pour manifestation, en surface du tuyau flexible, une réduction de diamètre accentuant l'effet visuel du bombement des zones de dilatation radiale (C).

Les variations dimensionnelles des zones de contraction radiale (C) et contractiles (A) se produisent dès que la pression de fuite (Pf) atteint la valeur seuil (Vs) et permettent une détection précoce du dysfonctionnement, ces effets étant dus, d'une part aux différentiels d'angles de pose, d'autre part à la faible cohésion du coussinet de portance (8) dont la résistance à la déchirure est au plus égale à 5 bars et la valeur d'adhérence aux éléments au contact n'excède pas 5 daN/cm de largeur.

A chaque zone comportant une variation dimensionnelle sous l'effet de la pression de fuite (Pf), est, préférentiellement, associée, par l'intermédiaire d'une zone de raccordement (D) de faible longueur, une zone à invariance dimensionnelle (B).

Cette disposition préférentielle permet une meilleure répartition des efforts en établissant une progressivité de raccordement entre le différentiel d'angle de pose de valeur négative de l'armature de sécurité (9) dans la zone de dilatation radiale (C) et le différentiel d'angle de pose de valeur positive de ladite armature de sécurité (9) dans la zone contractile (A), puisque le raccordement s'effectue, dans chaque cas, entre les nappes croisées présentant une valeur extrême, positive ou négative, du différentiel d'angle de pose et celles présentant une valeur proche de zéro du différentiel d'angle de pose situées dans la zone à invariance dimensionnelle (B).

Que cette disposition préférentielle soit ou non adoptée, la combinaison, dans la direction axiale, des zones de dilatation radiale (C), des zones contractiles (A) et des zones à invariance dimensionnelle (B) permet d'obtenir l'effet visuel de bombement et de creusement superficiels du tuyau flexible, sans modification de sa longueur entre brides, le raccourcissement des zones de dilatation radiale (C) étant compensé par le jeu de l'allongement des zones contractiles (A).

Les dispositions des constituants de la paroi (4) du tuyau flexible telles que décrites sont celles du corps du tuyau flexible dans le corps cylindrique (1).

Dans les zones transitoires de raccordement (3), de forme générale tronconique, l'épaisseur initiale (E) de la paroi (4) diminue progressivement jusqu'à une valeur finale (e) au voisinage même de la bride (2), par réduction progressive d'épaisseur du coussinet de portance (8) et du coussin intercalaire de portance (11).

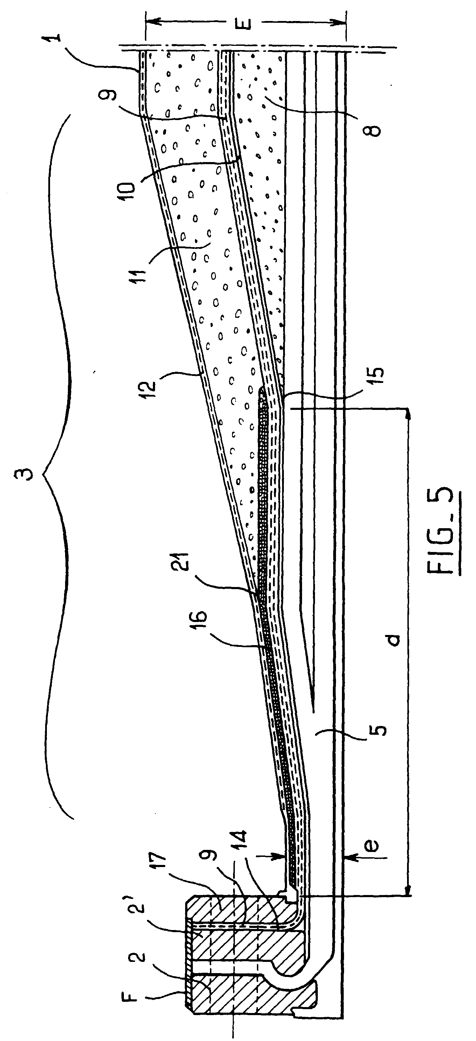

Les figures 5, 6 et 7 schématisent différentes structures de la paroi (4) du tuyau flexible dans les zones transitoires de raccordement (3) entre le corps cylindrique (1) dudit tuyau flexible et les brides (2), dont le but est d'assurer la solidarisation de l'armature principale (5) et de l'armature de sécurité (9) pour réaliser la liaison d'extrémité.

La figure 5 illustre schématiquement un exemple de réalisation de ladite liaison d'extrémité.

Dans la zone transitoire de raccordement (3), au voisinage du corps cylindrique (1), est donnée au coussinet de portance (8) une forme d'extrémité en biseau faisant progressivement décroître son épaisseur jusqu'à une valeur nulle au niveau de la ligne de contact inter-armatures (15). L'ensemble constitué par l'armature de sécurité (9) et la strate de confinement (10) rejoint l'armature principale (5) le long de la ligne de contact inter-armatures (15) et épouse complètement sa face supérieure dans la région située entre un flasque additionnel (17) rapporté au contact de la face (14) de la contre-bride (2') et ladite ligne de contact inter-armatures (15), sur une distance (d).

L'armature principale (5) et l'armature de sécurité (9) sont alors rendues solidaires par collage de la face inférieure de la strate de confinement (10) sur la face supérieure de l'armature principale (5), ladite strate de confinement (10) étant adhérente à l'armature de sécurité (9).

Un frettage radial unique (16) est placé entre l'armature de sécurité (9) et, d'abord, l'extrémité en biseau, du coussin intercalaire de portance (11) dans lequel il est noyé, puis le revêtement périphérique (12), au voisinage du flasque additionnel (17).

Le frettage radial unique (16), réalisé par un enroulement transversal de cablés textiles ou métalliques, assure le confinement de fuites éventuelles par l'intermédiaire de la strate de confinement (10) et le maintien de l'armature de sécurité (9) au contact intime de l'armature principale (5).

La strate de confinement (10) se prolonge sous la contre-bride (2'), de laquelle elle est rendue solidaire par adhérence physico-chimique, assurant, de ce fait, l'enveloppage étanche de l'armature principale (5) dont l'extrémité est enserrée par la bride (2).

Pour une sécurité complémentaire, l'extrémité de l'armature de sécurité (9) est enserrée entre la face (14) de la contre-bride (2') et le flasque additionnel (17).

La sécurité de l'assemblage de la bride (2) est renforcée par un élément de cerclage d'étanchéité (F) qui vient protéger du contact avec le milieu extérieur les extrémités de l'armature principale (5) et de l'armature de sécurité (9).

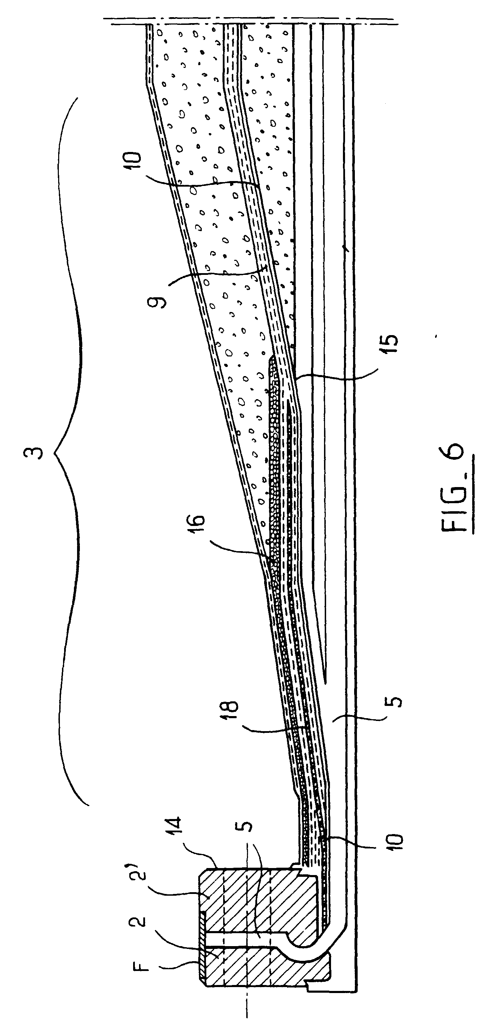

Dans la variante de la figure 6, qui illustre également la liaison d'extrémité au voisinage de la bride (2), l'assemblage est encore amélioré par adjonction d'une couche d'accrochage mécanique (18) qui peut être un élément distinct de l'armature principale (5) ou son prolongement.

Ladite couche (18) se trouve insérée entre deux éléments constitutifs de l'armature de sécurité (9), depuis la ligne de contact inter-armatures (15) jusqu'à proximité de la contrebride (2') où elle rejoint la face supérieure de l'armature principale (5) à laquelle elle est intimement liée, soit par liaison adhésive physico-chimique, soit parce qu'elle en constitue le prolongement naturel.

Préférentiellement, la couche d'accrochage mécanique (18) est constituée d'une composition élastomérique comportant des cablés de renforcement textiles ou métalliques.

Comme dans la variante précédente, l'armature principale (5) est rendue solidaire de la demi-bride interne (2'), ici par l'intermédiaire de la couche d'accrochage mécanique (18). Cette disposition permet d'assurer un enveloppage étanche de l'armature principale (5), par le prolongement de la strate de confinement (10) sous la demi-bride interne (2').

Le frettage radial unique (16) joue le même rôle que dans la variante précédente.

A la bride (2) peut être adjoint, comme dans la variante précédente, un flasque additionnel destiné à enserrer, avec la contre-bride (2'), l'extrémité de l'armature de sécurité (9).

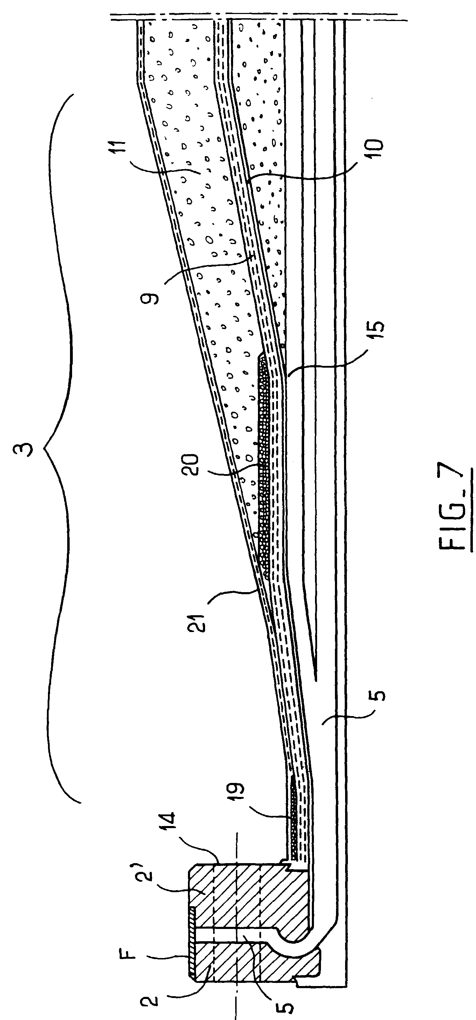

D'une manière similaire, la figure 7 illustre un autre mode de réalisation de la zone transitoire de raccordement (3).

Que la liaison entre l'armature principale (5) et l'armature de sécurité (9), dans la région comprise entre la ligne de contact inter-armatures (15) et la contre-bride (2'), s'opère par l'intermédiaire de la strate de confinement (10), seule comme représenté, ou à laquelle s'ajoute la couche d'accrochage mécanique (18), comme dans la variante précédente, le confinement des fuites de liquide ayant traversé l'armature principale (5) et le maintien au contact intime de cette dernière avec l'armature de sécurité (9) sont assurés, dans la présente variante, par un double frettage (19, 20). Il est constitué d'un frettage d'extrémité (19), au voisinage de la contre-bride (2'), et d'un frettage intercalaire (20), disposé entre l'armature de sécurité (9) et le coussin intercalaire de portance (11), de la ligne de contact inter-armatures (15) à la ligne de liaison revêtement-armature de sécurité (21). Le double frettage (19, 20) est constitué d' enroulements transversaux de cablés textiles ou métalliques.

Il est bien évident que peuvent être combinés, dans d'autres variantes, divers éléments des modes de réalisation illustrés sur les figures 5 à 7. Il est ainsi possible d'associer, à la bride (2) comportant le flasque additionnel (17), la couche d'accrochage mécanique (18) et/ou le double frettage constitué du frettage d'extrémité (19) et du frettage intercalaire (20).

Pour illustrer l'invention par une réalisation pratique, est décrit le mode de réalisation d'un tuyau flexible du type autoflottant d'une longueur (L) entre brides (2) de 10 mètres environ, d'un diamètre extérieur (De), dans le corps cylindrique (1), de 650 millimètres et d'un diamètre intérieur (Di) de 400 millimètres. Il est constitué de deux zones transitoires de raccordement (3), une à chaque extrémité, d'une longueur unitaire de 650 millimètres, de trois zones contractiles (A) d'une longueur unitaire de 800 millimètres, de quatre zones à invariance dimensionnelle (B) d'une longueur unitaire de 600 millimètres, de deux zones de dilatation radiale (C) d'une longueur unitaire de 1500 millimètres et de dix zones de raccordement (D) présentant chacune une longueur de 90 millimètres.

Il est bien évident que l'agencement des différentes zones composant le tuyau flexible peut être varié selon les effets désirés, la réalisation définie ci-dessus n'étant donnée qu'à titre d'illustration. La structure la plus simple serait, en effet, composé d'une zone contractile (A), d'une zone de dilatation radiale (C), et de deux zones transitoires de raccordement (3) reliées entre elles par des zones de raccordement (D), la longueur de la zone à invariance dimensionnelle (B) étant, dans ce cas, égale à zéro.

La réalisation d'un tel tuyau flexible auto-flottant se fait par enroulements successifs, sur un mandrin présentant les dimensions appropriées, d'au moins les constituants suivants :
- en premier lieu, est placée la robe d'étanchéité (6), d'épaisseur millimétrique ;
- puis, au dessus, est posée l'armature principale (5), à un angle (µ) de 36 degrés par rapport au plan diamétral du tuyau flexible ;
- vient ensuite la couche intercalaire de séparation des armatures (7), d'épaisseur millimétrique ;
- au dessus, est disposé le coussinet de portance (8), d'épaisseur centimétrique, en matériau cellulaire, présentant une inertie chimique au fluide véhiculé, afin de ne pas subir de dégradation en cas de défaillance de l'armature principale (5). Il présente une faible cohésion afin de permettre les variations dimensionnelles des zones contractiles (A) et des zones de contraction radiale (C), ainsi qu'une meilleure répartition des contraintes dans les zones à invariance dimensionnelle (B) ;
- au dessus est enroulée la strate de confinement (10) destinée à protéger l'armature de sécurité (9) posée par la suite à son contact, contre l'agression par le fluide ayant traversé l'armature principale (5) défaillante ; elle est constituée d'une épaisseur millimétrique d'une composition élastomérique compacte, préférentiellement à base de polyisoprène naturel ou de synthèse ;
- l'armature de sécurité (9), est placée par dessus ; elle est constituée d'au moins une paire de nappes de cablés textiles, préférentiellement de polyamide ou de polyester, posés à un différentiel d'angle de pose variable selon les zones du tuyau flexible ;
- dans la zone (D) est disposé, par enroulement radial, le renfort transversal (13) ayant pour but d'assurer la cohésion des différents plis des nappes croisées de l'armature de sécurité (9) ;
- au dessus de l'armature de sécurité (9), vient prendre place le coussin intercalaire de portance (11) réalisé en matériau cellulaire, d'épaisseur adaptée pour assurer, avec le coussinet de portance (8), la flottabilité en service du tuyau flexible ; préférentiellement le matériau du coussin intercalaire de portance (11) est de même nature et de même densité que celui du coussin de portance (8) ;
- la paroi (4) du corps cylindrique (1) étant ainsi constituée, il est procédé à la préparation de chaque zone transitoire de raccordement (3), par réduction progressive de l'épaisseur du coussin intercalaire de portance (11) et pose, par enroulement transversal à spires jointives, au dessus de l'armature de sécurité (9), soit du frettage radial unique (16), soit du frettage d'extrémité (19) et du frettage intercalaire (20).
- en dernier lieu, est disposé, par dessus le coussin intercalaire de portance (11), le revêtement périphérique (12), présentant une résistance chimique aux éléments hostiles de l'environnement et une résistance mécanique aux manipulations lors de la mise en place et aux chocs par les objets flottants ;
- la mise en place des brides (2) se fait au cours de la confection.

Il est procédé à la vulcanisation par étapes dans un équipement approprié, tel qu'un autoclave, qui, sous l'effet combiné de la pression et du traitement thermique assure simultanément la réticulation des compositions élastomériques et la liaison intime, par voie physico-chimique, des différents composants.

En variante de la réalisation décrite pour un tuyau flexible auto-flottant, peut être fabriqué, dans des conditions similaires, un tuyau flexible utilisable en version submersible.

Dans ce cas, le coussinet de portance (8) voit son épaisseur réduite à quelques millimètres et est constitué d'un matériau compact à faible cohésion créant une zone de moindre résistance ; simultanément, le coussin intercalaire de portance (11) est constitué d'une couche d'épaisseur millimétrique d'une composition élastomérique ou polymérique compacte susceptible d'adhérer à l'armature de sécurité (9) et au revêtement périphérique (12).

Lors d'un fonctionnement normal, le tuyau flexible selon l'invention se présente sous la forme d'un cylindre de diamètre extérieur (De) sur l'ensemble du corps cylindrique (1) et de zones transitoires de raccordement (3) de forme tronconique.

Lorsque se produit dans l'armature principale (5) une défaillance, une partie du fluide véhiculé s'échappe vers la paroi (4) en provoquant une pression de fuite (Pf) dans l'espace compris entre l'armature principale (5) et l'armature de sécurité (9).

La strate de confinement (10) empêche la pénétration du fluide vers les couches plus externes de la paroi (4), protégeant l'armature de sécurité (9) et le coussin intercalaire de portance (11). Dès que la pression de fuite (Pf) atteint la valeur seuil (Vs), elle provoque, grâce à la faible cohésion du coussinet de portance (8), les déformations localisées de l'armature de sécurité (9), dans les différentes zones du tuyau flexible, déformations transmises jusqu'au revêtement périphérique (12) par l'intermédiaire du coussin intercalaire de portance (11).

Le tuyau flexible présente alors une forme de chenille, formée d'une succession de zones gonflées et de zones creusées, les zones à dilatation radiale (C) voyant leur diamètre extérieur initial (De) augmenter de 30 % environ, pendant que les zones contractiles (A) voient leur diamètre extérieur initial (De) réduit à 97 % environ de sa valeur initiale, ce qui permet une détection visuelle immédiate du dysfonctionnement du tuyau flexible devenu inapte à remplir ses fonctions.

Ces déformations radiales s'accompagnent d'une réduction de longueur de 20 % environ dans les zones de dilatation radiale (C) que vient compenser un allongement de l'ordre de 23 % dans les zones contractiles (A).

Les zones transitoires de raccordement (3), comme les zones à invariance dimensionnelle (B) conservent inchangées leurs dimensions, tant radiales que longitudinales. Dans l'exemple de réalisation pratique précédemment décrit, à partir de la valeur seuil (Vs) de la pression de fuite (Pf), les zones de dilatation radiale (C) voient leur diamètre extérieur (De) passer à 845 millimètres pendant que les zones contractiles (A) voient le leur passer à 630 millimètres. La différence entre le diamètre maximal des zones de dilatation radiale (C) et le diamètre minimal des zones contractiles (A) prend une valeur de 215 millimètres accentuant l'effet visuel permettant la détection du dysfonctionnement.

Simultanément, la réduction de longueur des zones de dilatation radiale (C) qui est de 600 millimètres pour chacune d'elles se trouve compensée par une augmentation de longueur de 200 millimètres de chacune des zones contractiles (A) permettant de ce fait que la longueur du tuyau flexible entre les brides (2) demeure sensiblement constante.

Sans accroître la complexité, donc le coût, de la réalisation, le tuyau flexible objet de l'invention présente, par rapport aux réalisations antérieures, les avantages suivants :
- détection visuelle précoce du dysfonctionnement grâce aux déformations localisées dès que de la valeur seuil (Vs) de la pression de fuite (Pf) du liquide véhiculé atteint un quart de la pression de service (Ps) ;
- élimination de longueurs inutiles entre le point de chargement/déchargement et le navire, grâce à la compensation des déformations longitudinales ;
- possibilité de fabrication, sur les mêmes principes, de tuyaux flexibles auto-flottants ou submersibles.

L'homme de l'art peut, sans sortir des limites de l'invention, combiner entre elles les différentes variantes de structure du tuyau flexible et des brides objet de l'invention.

## Revendications

1. Tuyau flexible permettant la détection visuelle précoce d'un dysfonctionnement, dont la paroi (4) comporte, dans le corps cylindrique (1), de sa partie la plus interne jusqu'à sa partie externe, une robe d'étanchéité (6), une armature principale (5), une couche intercalaire de séparation des armatures (7), un coussinet de portance (8), une strate de confinement (10), une armature de sécurité (9) dont la structure autorise, dans des zones déterminées, une déformation localisée, au moins l'une desdites zones étant une zone de dilatation radiale (C), un coussin intercalaire de portance (11) et un revêtement périphérique (12), ledit tuyau flexible étant caractérisé
- en ce que l'armature de sécurité est co-axiale à l'armature principale (5) sur la totalité de sa longueur et en est maintenue écartée, dans le corps cylindrique (1), par un coussinet de portance (8) de faible cohésion, dont la résistance à la déchirure est au plus égale à 5 bars et l'adhérence aux constituants au contact est au plus égale à 5 daN/cm de largeur,
- en ce qu'il présente au moins une zone de compensation (A, B) dans laquelle le différentiel d'angle de pose (α, β) de l'armature de sécurité (9) par rapport à l'angle d'équilibre est compris entre -2 et +12 degrés,
- en ce qu'au moins une zone de compensation est formée d'une zone contractile (A) dans laquelle le différentiel d'angle de pose (α) de l'armature de sécurité (9) est compris entre +3 et +12 degrés et d'une zone à invariance dimensionnelle (B) dans laquelle le différentiel d'angle de pose (β) de l'armature de sécurité (9) est compris entre -2 et +2 degrés,
- de sorte que la déformation localisée se produit dès que la pression de fuite (Pf) du fluide ayant traversé l'armature principale (5) défaillante atteint une valeur seuil (Vs), fraction de la pression normale de service (Ps).

2. Tuyau flexible selon la revendication 1, caractérisé en ce que les cablés de l'armature principale (5) sont des cablés de haut module, en acier ou en polyamide aromatique, disposés à un angle de pose voisin de 36 degrés par rapport au plan diamétral dudit tuyau flexible.

3. Tuyau flexible selon l'une des revendications 1 ou 2, caractérisé en ce que le coussinet de portance (8) et le coussin intercalaire de portance (11) sont constitués d'une composition élastomérique compacte, d'épaisseur millimétrique.

4. Tuyau flexible selon la revendication 3, caractérisé en ce que le coussinet de portance (8) est partiellement constitué d'un tissu dépourvu localement de traitement adhésif.

5. Tuyau flexible selon la revendication 3, caractérisé en ce que le coussinet de portance (8) est partiellement constitué d'un film polymérique mince, de polyéthylène, de polypropylène ou de polyester.

6. Tuyau flexible selon l'une des revendications 1 ou 2, caractérisé en ce que le coussinet de portance (8) et le coussin intercalaire de portance (11) sont constitués d'une composition cellulaire d'épaisseur centimétrique de masse spécifique comprise entre 30 et 70 kg/m3.

7. Tuyau flexible selon l'une des revendications 1 à 6 , caractérisé en ce que, dans des zones de raccordement (D), l'assemblage des plis de l'armature de sécurité (9) comporte un renfort transversal (13), constitué d'un enroulement de câblés orthogonal à l'axe longitudinal (XX') du tuyau flexible et noyé au sein du coussin intercalaire de portance (11).

8. Tuyau flexible selon l'une des revendications 1 à 7, caractérisé en ce que la valeur seuil (Vs) de la pression de fuite (Pf) est égale au quart de la pression de service (Ps) et provoque, dans chaque zone de dilatation radiale (C), un gonflement radial jusqu'à une valeur de 130 % de son diamètre initial (De) accompagné d'une réduction de longueur de 20 % environ et, dans chaque zone contractile (A) une réduction du diamètre à 97 % environ de sa valeur initiale (De), accompagnée d'un allongement de 23 % environ, venant compenser la réduction de longueur de la zone de dilatation radiale (C).

9. Tuyau flexible selon l'une des revendications 1 à 8, caractérisé en ce que, dans une zone transitoire de raccordement (3), un frettage radial unique (16), constitué d'un enroulement de câblés textiles ou métalliques orthogonal à l'axe longitudinal (XX') du tuyau flexible vient enserrer l'armature de sécurité (9) pour assurer son contact intime avec la strate de confinement (10) et l'armature principale (5).

10. Tuyau flexible selon l'une des revendications 1 à 8, caractérisé en ce que le frettage de l'armature principale (5) et de l'armature de sécurité (9) est assuré par un frettage d'extrémité (19) et d'un frettage intercalaire (20).

11. Tuyau flexible selon l'une des revendications 1 à 10, caractérisé en ce qu'une couche d'accrochage mécanique (18) est insérée entre deux éléments constitutifs de l'armature de sécurité (9) depuis la ligne de, contact inter-armatures (15) jusqu'à la face interne d'une contre-bride (2') où elle rejoint la face supérieure de l'armature principale (5).

12. Tuyau flexible selon la revendication 11, caractérisé en ce que la couche d'accrochage mécanique (18) est le prolongement de l'armature principale (5).

13. Tuyau flexible selon l'une des revendications 11 ou 12, caractérisé en ce qu'une bride (2) comporte la contre-bride (2') pour enserrer l'extrémité libre de l'armature principale (5) et un flasque additionnel (17) venant enserrer l'extrémité libre de l'armature de sécurité (9), la strate de confinement (10) se prolongeant jusque sous la partie interne de la contre-bride (2') et en ce qu'un cerclage d'étanchéité (F) est placé circonférentiellement sur ladite bride (2).

## Patentansprüche

1. Flexibles Rohr, welches die vorzeitige visuelle Detektion einer Fehlfunktion ermöglicht, dessen Wand (4) im zylindrischen Körper (1) von seinem innersten Bereich bis zu seinem äußeren Bereich eine Dichtauskleidung (6), eine Hauptarmierung (5), eine Zwischenschicht (7) zur Trennung der Armierungen, ein Auftriebsfutter (8), eine Begrenzungsschicht (10), eine Sicherheitsarmierung (9), deren Struktur in bestimmten Zonen eine örtlich begrenzte Verformung ermöglicht, wobei wenigstens eine dieser Zonen eine Zone radialer Dilatation (C) ist, ein Auftriebs-Zwischenkissen (11) und eine Umfangsverkleidung (12) aufweist, wobei das flexible Rohr dadurch gekennzeichnet ist,
- daß die Sicherheitsarmierung sich koaxial zur Hauptarmierung (5) über die Gesamtheit ihrer Länge erstreckt und in Abstand von dieser an dem zylindrischen Körper (1) über ein Auftriebsfutter (8) geringer Kohäsion gehalten ist, dessen Reißfestigkeit wenigstens gleich 5 bar ist und dessen Haftfähigkeit an die in Kontakt befindlichen Bestandteile wenigstens gleich 5 daN/cm Breite ist,
- daß es wenigstens eine Kompensationszone (A, B) aufweist, in welcher das Differential des Einbauwinkels (α, β) der Sicherheitsarmierung (9) in bezug auf den Gleichgewichtswinkel zwischen -2 und +12° beträgt,
- daß wenigstens eine Kompensationszone von einer zusammenziehbaren Zone (A), in welcher das Differential des Einbauwinkels (α) der Sicherheitsarmierung (9) zwischen +3 und +12° liegt, und wenigstens einer maßbeständigen Zone (B) gebildet ist, in welcher das Differential des Einbauwinkels (β) der Sicherheitsarmierung (9) zwischen -2 und +2° liegt, derart,
- daß sich die örtlich begrenzte Verformung ausbildet, wenn der Leckagedruck (Pf) des durch die fehlerhafte Hauptarmierung (5) hindurchgetretenen Fluids einen Schwellwert (Vs) erreicht, welcher ein Bruchteil des normalen Betriebsdruckes (Ps) ist.

2. Flexibles Rohr nach Anspruch 1, dadurch gekennzeichnet, daß die Corde der Hauptarmierung (5) Corde mit hohem Modul aus Stahl oder aus aromatischen Polyamiden sind, welche unter einem Einbauwinkel nahe 36° in bezug auf die Durchmesserebene des flexiblen Rohres angeordnet sind.

3. Flexibles Rohr nach einem der Ansprüche 1 oder 2, dadurch gekennzeichnet, daß das Auftriebsfutter (8) und das Auftriebs-Zwischenkissen (11) von einer elastomeren, kompakten Zusammensetzung mit einer Dicke im-Bereich von Millimetern gebildet sind.

4. Flexibles Rohr nach Anspruch 3, dadurch gekennzeichnet, daß das Auftriebsfutter (8) teilweise von einem Gewebe gebildet ist, welches lokal ohne Klebebehandlung ausgebildet ist.

5. Flexibles Rohr nach Anspruch 3, dadurch gekennzeichnet, daß das Auftriebsfutter (8) teilweise von einem dünnen Polymerfilm aus Polyethylen, Polypropylen oder Polyester gebildet ist.

6. Flexibles Rohr nach einem der Ansprüche 1 oder 2, dadurch gekennzeichnet, daß das Auftriebsfutter (8) und das Auftriebs-Zwischenkissen (11) von einer zellulären Zusammensetzung mit einer Dicke im Bereich von Zentimetern gebildet sind, deren spezifische Masse zwischen 30 und 70 kg/m³ liegt.

7. Flexibles Rohr nach einem der Ansprüche 1 bis 6, dadurch gekennzeichnet, daß in Anschlußzonen (D) der Zusammenbau der Falten der Sicherheitsarmierung (9) eine Transversalverstärkung (13) umfaßt, welche von einer zur Längsachse (XX') des flexiblen Rohres orthogonalen Wicklung von Corden gebildet ist und welche im Inneren des Auftriebs-Zwischenkissens (11) eingebettet ist.

8. Flexibles Rohr nach einem der Ansprüche 1 bis 7, dadurch gekennzeichnet, daß der Schwellwert (Vs) des Leckagedruckes (Pf) gleich einem Viertel des Betriebsdruckes (Ps) ist und in jeder Zone einer radialen Dilatation (C) ein radiales Ausweiten bis zu einem Wert von 130 % seines ursprünglichen Durchmessers (De), begleitet von einer Längenreduktion von ungefähr 20 %, und in jeder zusammenziehbaren Zone (A) eine Reduktion des Durchmessers auf ungefähr 97 % seines ursprünglichen Wertes (De), begleitet von einer Verlängerung von ungefähr 23 % bewirkt, um die Längenreduktion der Zone radialer Dilatation (C) zu kompensieren.

9. Flexibles Rohr nach einem der Ansprüche 1 bis 8, dadurch gekennzeichnet, daß in einer Übergangszone der Verbindung (3) eine in radialer Richtung einstückige Versteifung (16), welche von einer von Textil- oder Metallcorden gebildeten, zur Längsachse (XX') des flexiblen Rohres orthogonalen Wicklung gebildet ist, die Sicherheitsarmierung (9) umschließt, um deren innigen Kontakt mit der Begrenzungsschicht (10) und der Hauptarmierung (5) sicherzustellen.

10. Flexibles Rohr nach einem der Ansprüche 1 bis 8, dadurch gekennzeichnet, daß die Versteifung der Hauptarmierung (5) und der Sicherheitsarmierung (9) durch eine Endversteifung (19) und eine Zwischenversteifung (20) sichergestellt ist.

11. Flexibles Rohr nach einem der Ansprüche 1 bis 10, dadurch gekennzeichnet, daß eine Schicht einer mechanischen Verankerung (18) zwischen zwei die Sicherheitsarmierung (9) bildenden Elementen von der Berührungslinie zwischen den Armierungen (15) bis zur Innenfläche des Gegenflansches (2') eingefügt ist, an welcher sie an die obere Fläche der Hauptarmierung (5) anschließt.

12. Flexibles Rohr nach Anspruch 11, dadurch gekennzeichnet, daß die Schicht einer mechanischen Verankerung (18) die Verlängerung der Hauptarmierung (5) ist.

13. Flexibles Rohr nach einem der Ansprüche 11 oder 12, dadurch gekennzeichnet, daß ein Flansch (2) den Gegenflansch (2') zum Umschließen des freien Endes der Hauptarmierung (5) und einen zusätzlichen Flansch (17) umfaßt, welcher das freie Ende der Sicherheitsarmierung (9) umschließt, wobei die Begrenzungsschicht (10) bis unter den inneren Bereich des Gegenflansches (2') verlängert ist, und daß eine Dichtungseinfassung (F) am Umfang an diesem Flansch (2) angeordnet ist.

## Claims

1. Flexible pipe allowing early visual detection of a malfunction, the wall (4) of which comprises, within the cylindrical body (1), from its innermost part to its outer part, a sealing skin (6), a main reinforcement (5), an interpolated layer separating the reinforcements (7), a lift bearing (8), a confinement stratum (10), a safety reinforcement (9) the structure of which permits a localised deformation in determined zones, at least one of said zones being a radial expansion zone (C), an interpolated lift cushion (11) and a peripheral covering (12), said flexible pipe being characterised:
- in that the safety reinforcement is coaxial with the main reinforcement (5) over its whole length and is held at a distance therefrom, within the cylindrical body (1), by a low-cohesion lift bearing (8), the tear-resistance of which is at most equal to 5 bars and the adherence to components in contact is at most equal to 5 daN/cm width,
- in that it has at least one compensation zone (A, B) in which the differential of the laying angle (α, β) of the safety reinforcement (9) relative to the angle of equilibrium is between -2 and +12 degrees,
- in that at least one compensation zone is formed by a contractile zone (A) in which the differential of the laying angle (α) of the safety reinforcement (9) is between +3 and +12 degrees and by a zone of dimensional invariance (B) in which the differential of the laying angle (β) of the safety reinforcement (9) is between -2 and +2 degrees,
such that the localised deformation occurs as soon as the leakage pressure (Pf) of the fluid that has passed through the defective main reinforcement reaches a threshold value (Vs) that is a fraction of the normal operating pressure (Ps).

2. Flexible pipe according to Claim 1, characterised in that the cables of the main reinforcement (5) are high-modulus cables, made of steel or aromatic polyamide, arranged at a laying angle that is close to 36 degrees relative to the diametral plane of said flexible pipe.

3. Flexible pipe according to one of Claims 1 or 2, characterised in that the lift bearing (8) and the interpolated lift cushion (11) are constituted by a compact elastomeric compound of millimetric thickness.

4. Flexible pipe according to Claim 3, characterised in that the lift bearing (8) is constituted partly by a fabric which is locally devoid of adhesive treatment.

5. Flexible pipe according to Claim 3, characterised in that the lift bearing (8) is partly constituted by a thin polymeric film, by polyethylene, by polypropylene or by polyester.

6. Flexible pipe according to one of Claims 1 or 2, characterised in that the lift bearing (8) and the interpolated lift cushion (11) are constituted by a cellular composition of centimetric thickness having a specific mass between 30 and 70 kg/m³.

7. Flexible pipe according to one of Claims 1 to 6, characterised in that, in connection zones (D), the assembly of plies of the safety reinforcement (9) includes a transverse strengthener (13) constituted by a winding of cables orthogonal to the longitudinal axis (XX') of the flexible pipe and embedded within the interpolated lift cushion (11).

8. Flexible pipe according to one of Claims 1 to 7, characterised in that the threshold value (Vs) of the leakage pressure (Pf) is equal to one quarter of the operating pressure (Ps) and causes, in each radial expansion zone (C), a radial swelling up to a value of 130% of its initial diameter (De) accompanied by a reduction in length of about 20% and, in each contractile zone (A), a reduction in diameter of about 97% of its initial value (De), accompanied by an elongation of about 23%, compensating for the reduction in length of the radial expansion zone (C).

9. Flexible pipe according to one of Claims 1 to 8, characterised in that, in a transitory connection zone (3), a single radial hooping (16), constituted by a winding of textile or metal cables orthogonal to the longitudinal axis (XX') of the flexible pipe encloses the safety reinforcement (9) so as to ensure its intimate contact with the confinement stratum (10) and the main reinforcement (5).

10. Flexible pipe according to one of Claims 1 to 8, characterised in that the hooping of the main reinforcement (5) and of the safety reinforcement (9) is carried out by an end hooping (19) and intermediate hooping (20).

11. Flexible pipe according to one of Claims 1 to 10, characterised in that a mechanical attachment layer (18) is inserted between two constituent elements of the safety reinforcement (9) from the inter-reinforcement contact line (15) up to the inner face of a mating flange (2') where it joins the upper face of the main reinforcement (5).

12. Flexible pipe according to Claim 11, characterised in that the mechanical attachment layer (18) is the extension of the main reinforcement (5).

13. Flexible pipe according to one of Claims 11 or 12, characterised in that a collar (2) comprises the mating flange (2') so as to grip the free end of the main reinforcement (5) and an additional flange (17) which grips the free end of the safety reinforcement (9), the confinement stratum (10) extending to below the inner part of the mating flange (2') and in that a sealing band (F) is placed circumferentially over said collar (2).
